(19) Europäisches Patentamt
European Patent Office
Office européen des brevets

(11) **EP 1 368 929 B1**

## (12) EUROPÄISCHE PATENTSCHRIFT

(45) Veröffentlichungstag und Bekanntmachung des Hinweises auf die Patenterteilung:
**05.06.2019 Patentblatt 2019/23**

(21) Anmeldenummer: **02712798.4**

(22) Anmeldetag: **20.02.2002**

(51) Int Cl.:
***H04L 9/32*** *(2006.01)*

(86) Internationale Anmeldenummer:
**PCT/DE2002/000616**

(87) Internationale Veröffentlichungsnummer:
**WO 2002/073374 (19.09.2002 Gazette 2002/38)**

(54) **VERFAHREN ZUR AUTHENTIKATION**

AUTHENTICATION METHOD

PROCÉDÉ D'AUTHENTIFICATION

(84) Benannte Vertragsstaaten:
**AT DE FR GB IT**

(30) Priorität: **12.03.2001 DE 10111756**

(43) Veröffentlichungstag der Anmeldung:
**10.12.2003 Patentblatt 2003/50**

(73) Patentinhaber: **Siemens Aktiengesellschaft**
**80333 München (DE)**

(72) Erfinder:
• **MEYER, Bernd**
**81737 München (DE)**
• **HESS, Erwin**
**85521 Ottobrunn (DE)**

(56) Entgegenhaltungen:
• **MENEZES A J ET AL: "Handbook of Applied Cryptography, passage" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, Seiten 294-296, 400-401, 506-508, XP002219455 ISBN: 0-8493-8523-7**

**Beschreibung**

Die vorliegende Erfindung betrifft ein Verfahren zur Authentikation eines Datensatzes zwischen einer beweisführenden Einheit und einer verifizierenden Einheit in der Datenverarbeitung.

Im Bereich der Verwendung von Chipkarten als Kredit-, Debit-, Geld-, Identifikations-, Zugangs- oder Zeitkontrollkarten etc. oder etwa als Nachrichtenträger stellt die Frage des Schutzes der auf der Karte vorhandenen Informationen vor einem unberechtigten Zugriff Dritter ein zentrales Problem dar. Ein besonderer Aspekt ist dabei auch die gesicherte Datenübertragung zwischen der Chipkarte und z.B. dem CAD (card adapter device) eines Chipkartenterminals. Dies wird durch den Prozeß der sog. Authentikation der beteiligten Einheiten, hier der Chipkarte und dem Terminal, ermöglicht: dabei gelangt z.B. das Terminal zu dem hinreichend gesicherten Nachweis über die Identität der mit ihm in einem Protokoll befindlichen Chipkarte. Im Gegenzug kann durch einen entsprechenden Prozeß auch die Chipkarte Sicherheit über die Identität des Terminals im Moment der gegenseitigen Überprüfung erlangen. Entsprechendes gilt auch für die Authentizität der übertragenen Daten.

Der Nachweis der Identität kann dadurch geliefert werden, daß nur den beteiligten Einheiten bekannte, geheime Informationen ausgetauscht werden. Man unterscheidet hierbei die sog. schwache und starke Authentikation. Bei der erstgenannten gibt z.B. der Besitzer einer Magnetstreifenkarte ein Paßwort oder eine PIN über eine Tastatur ein und authentifiziert sich somit als rechtmäßiger Eigentümer seiner Karte. Hierbei wird das Geheimnis übertragen. Bei der starken Authentikation tauscht in einem sog. Challenge-Response-Verfahren eine die Identität des Protokollpartners verifizierende Einheit (im folgenden engl. verifier genannt) in einem Dialog mit der über ihre Identität beweisführenden Einheit (im folgenden engl. prover genannt) Authentisierungsinformation aus, die das Vorhandensein eines Geheimnisses belegt, ohne dies aber einem Angreifer preiszugeben. Das Protokollverfahren zwischen den Einheiten ist dabei meist a priori festgelegt.

Werden nach oder anstatt Informationen über die Identität der beteiligten Einheiten nur Daten transferiert, welche einem ähnlich hohen Sicherheitsbedürfnis unterliegen, so kann unter Anwendung eines analogen Protokollverfahrens auch verallgemeinert von einer Datenauthentikation gesprochen werden. Ein bekanntes Beispiel hierzu sind etwa die noch vorhandenen Geldbeträge auf Telefonkarten, welche dem Telefonterminal von der Karte authentisch mitgeteilt werden.

Bei der für Chipkarten besonders wichtigen starken Authentikation haben sich im wesentlichen zwei Ansätze für verschiedene Anwendungen herauskristallisiert. Vom Einsatz bei Telefonkarten (Geldkarten) her bekannt ist die Verwendung von symmetrischen Authentikationsverfahren zum Austausch von Identitätskennzeichen und Daten. Das Grundprinzip besteht darin, daß für die Authentikation der Karte (des Provers) gegenüber dem Terminal (dem Verifier) dieses zunächst der Karte eine Zufallszahl sendet, welche aus dieser Zufallszahl mit einem beiden Einheiten bekannten Geheimschlüssel unter Verwendung eines geeigneten Verfahrens einen Authentikationswert errechnet und anschließend dem Terminal zurücksendet. Dieses erkennt durch Vergleich der mit seinem Schlüssel durchgeführten Berechnungen mit der ursprünglich gesendeten Zufallszahl, ob die Karte den autorisierten Schlüssel verwendet hat. Der Karten- und Terminalhersteller verwendet hierzu oft das sog. Masterkey-Konzept, bei dem in jedem Terminal dieser Masterkey hinterlegt ist, aus welchem sich der bei der Kartencodierung (engl. card personalization) der Karte zugeordnete individuelle Schlüssel mittels eines Algorithmus aus ihrer Identitätskennzahl berechnen läßt. Ein älterer, bekannter Standard hierzu ist der data encryption standard (DES).

Gelingt es einem Angreifer in den Besitz des Masterkeys zu gelangen, so entsteht das Problem, daß das gesamte System für diesen offengelegt ist. Dieser Nachteil könnte durch Verwendung individuell für jede Karte hinterlegter Schlüsselpaare umgangen werden, welches jedoch beispielsweise durch die hohe Zahl im Umlauf befindlicher Telefonkarten und damit Schlüssel unpraktikabel ist. Im Falle von Telefonkarten behilft man sich heute umständlich mit weiteren kryptographischen Maßnahmen, welche auch einen Wechsel und eine eingeschränkte Gültigkeit der Masterkeys beinhalten.

Eine Alternative zu den symmetrischen Verfahren stellt das Versenden digitaler Signaturen in asymmetrischen Verfahren dar. Der Verifier (das Terminal) erzeugt eine Zufallszahl und sendet diese an den Prover (die Karte). Dieser signiert die Zufallszahl mit einem Verfahren zum Erzeugen digitaler Signaturen unter Verwendung eines nur ihm bekannten privaten Schlüssels eines Schlüsselpaares - der öffentliche Schlüssel liegt sowohl dem Prover als auch insbesondere dem Verifier vor. An den Verifier zurückgesendet, wird die digitale Signatur mit dem öffentlichen Schlüssel auf ihre Korrektheit überprüft, wobei der Verifier nicht in Kenntnis des privaten Schlüssels gelangt, sondern nur die Information erhält, daß der Prover sich im Besitz des privaten Schlüssels befindet und damit authentifiziert ist. Ein häufig benutzter Algorithmus für diese Methode stammt von Rivest, Shamir und Adleman (RSA).

Leider ist bei diesen Verfahren unter Verwendung digitaler Signaturen ein hoher Rechenaufwand bedingt durch die Langzahl-Modulo-Arithmetik auf Seiten des Provers, also z.B. auf einer Chipkarte, notwendig. Typischerweise müssen dabei zwei sehr große Zahlen miteinander multipliziert und wieder modular reduziert (auf die Ursprungsgröße zurückgebracht) werden. Die Hardwareimplementierung auf dem Chip einer Chipkarte führt dadurch einerseits zu einer kostenaufwendigeren Chipkartenherstellung oder auch zu unannehmbar langen Rechen- und Antwortzeiten.

Menezes, A. et al., "Handbook of Applied Cryptography", CRC Press, 1997, offenbart verschiedene kryptographische Verfahren. So werden beispielsweise in Kapitel 8 verschiedene Public-Key-Verfahren und in Kapitel 10 Möglichkeiten zur Challenge-Response-Identifikation beschrieben.

Es ist daher die Aufgabe der Erfindung die Kosten und den implementierungstechnischen Aufwand bei der Authentikation von Daten, insbesondere auch bei der Identifikation der beteiligten Einheiten, zu senken.

Die Aufgabe wird erfindungsgemäß durch die Maßnahmen des Patentanspruches 1 gelöst.

Gemäß der vorliegenden Erfindung wird ein Dialog eingeführt, bei welchem eine beweisende Einheit einer verifizierenden Einheit unter Verwendung asymmetrischer kryptographischer Schlüssel die Gemäß der vorliegenden Erfindung wird ein Dialog eingeführt, bei welchem eine beweisende Einheit einer verifizierenden Einheit unter Verwendung asymmetrischer kryptographischer Schlüssel die Authentizität der von ihr übermittelten Daten nachweist. Insbesondere kann sie dabei auch ihre eigene Identität nachweisen. Als Einheiten werden direkt miteinander in Kontakt tretende Module betrachtet, wobei ein beliebiger Übertragungsweg, z.B. elektronisch, lichtoptisch, akustisch etc. benutzt werden kann, und es sich bei den Modulen um integrierte Schaltungen enthaltende Systeme handelt, z.B. Chipkarten, Kartenterminals, Datenverarbeitungsanlagen wie Personal-Computer oder Server, etc.

Bei dem Verfahren wird ein Paar von öffentlichen und privaten Schlüsseln verwendet, wovon der private Schlüssel nur der beweisführenden Einheit, dem Prover, bekannt ist, während bei beiden Einheiten der zum privaten Schlüssel passende öffentliche Schlüssel hinterlegt ist, welches entweder durch eine vorab gesendete Nachricht bzw. eine Vorabinstallation oder durch eine Online-Verbindung zu einem zentralen Server auf Seiten der verifizierenden Einheit, dem Verifier, bewerkstelligt werden kann.

Ein wesentlicher Teilschritt des Verfahrens besteht darin, beiden beteiligten Einheiten, dem Prover und dem Verifier, den Datensatz, welcher authentifiziert werden soll, im Klartext bereitzustellen. Die Übertragung dazu kann verschlüsselt oder unverschlüsselt erfolgen. Bei der Datenauthentikation ist der Datensatz typischerweise zunächst beim Prover vorhanden, wobei dieser dann den Datensatz an den Verifier übermittelt, während bei der Einheitenauthentikation auch der Datensatz vom Verifier an den Prover übermittelt werden kann.

In den Schritten b) bis e), also im ersten Teil des Dialoges, wird dem Prover wenigstens ein Datenelement, welches im zweiten Teil des Dialoges als symmetrischer, nur den beiden Einheiten bekannter Schlüssel dient, vom Verifier in verschlüsselter Form zugestellt. Dies entspricht zunächst einem asymmetrischen Verfahren, denn der Prover benutzt seinen privaten Schlüssel, um das Datenelement zu entziffern. Zwar hat wie in einem herkömmlichen asymmetrischen Challenge-Response-Protokoll der Prover einen privaten Schlüssel, jedoch verwendet er ihn im Gegensatz dazu erfindungsgemäß nicht zur Bildung einer digitalen Signatur, sondern nur zur Entschlüsselung des empfangen, später selbst als Schlüssel dienenden wenigstens einen Datenelementes. Die Schritte b) bis e) folgen in ihrem zeitlichen Ablauf der im Anspruch angegebenen Reihenfolge.

Nach Schritt e) befinden sich die beiden Einheiten im Besitz des Klartextes des wenigstens einen Datenelementes. Der Austausch von mehr als nur einem Datenelement bietet sich an, wenn bei der Anwendung eines in den nachfolgenden Schritten vorgesehenen Algorithmus mehrfache Verknüpfungen des eigentlich zu authentisierenden Datensatzes mit den mehreren Datenelementen durchzuführen sind.

Die zur Erzeugung, Verschlüsselung, Übertragung und Entschlüsselung der mehreren Datenelemente jeweils notwendigen Sequenzen von Schritten können in beliebiger zeitlicher Zuordnung zueinander ausgeführt werden. Die relative zeitliche Zuordnung spielt also keine Rolle, es müssen aber alle Datenelemente zu Beginn von Schritt f) beim Prover unverschlüsselt vorliegen.

In Schritt f) wird der zu authentisierende Datensatz unter Zuhilfenahme des wenigstens einen Datenelementes authentisiert. Hierbei kann es sich wieder um ein asymmetrisches zweites kryptographisches Verfahren handeln, wenn nämlich das wenigstens eine Datenelement vom Verifier als öffentlicher Schlüssel zu einem weiteren, nur dem Verifier bekannten, privaten Schlüssel erzeugt wurde. Vorzugsweise wird hier jedoch ein symmetrisches zweites kryptographisches Verfahren AUTGEN verwendet. Der vermittels AUTGEN in Abhängigkeit von dem wenigstens einen Datenelement aus dem zu authentisierenden Datensatz gebildete - hier Authentikator genannte - transformierte Datensatz wird vom Prover wieder an den Verifier gesendet.

Der Verifier besitzt damit die Information über den Datensatz, den symmetrischen Schlüssel, d.h. das von ihm selbst versendete, wenigstens eine Datenelement, den Authentikator sowie einen auf das Verfahren AUTGEN abgestimmten Authentikationsprüfalgorithmus. Dieses kann anhand des vorhandenen symmetrischen Schlüssels den empfangenen Authentikator des Provers mit dem ursprünglichen Datensatz auf Korrektheit prüfen.

Im letzten Schritt wertet der Verifier diesen Vergleich aus: gehören empfangener Authentikator und ursprünglicher Datensatz zusammen, so gilt die Nachricht als vom Prover übermittelt. Weitere Kommunikationsschritte können dann folgen. Bei Nichtübereinstimmung kann der Verifier vorzugsweise die Kommunikation abbrechen.

Bei diesem Verfahren entsteht ein großer Vorteil dadurch, daß die im sicherheitstechnischen Sinne den symmetrischen Verfahren überlegenen Eigenschaften des Pubic-Key-Ansatzes, also der asymmetrischen Verfahren, ausgenutzt werden, ohne daß der bisher übliche implementierungstechnische Aufwand dabei anfällt, denn es ist beim erfindungsgemäßen Verfahren nicht mehr erforderlich, eine rechenintensive Langzahl-Modulo-Arithmetik bereitzustellen. Ein besonders bei Chipkarten entstehender Vorteil ist, daß der private Schlüssel nur noch auf der Seite des Provers, hier also der Karte, dauerhaft gespeichert werden muß, ohne daß der Verifier im Laufe des Dialoges in Kenntnis des Schlüssels kommt. Durch eine Implementierung mit aufeinander aufbauenden Rechenverfahren kann der auf dem Chip einer Chipkarte benötigte Platz für die Hardwareimplementierung erheblich verringert werden.

Nach einer weiteren Ausführungsform wird der Datensatz in Schritt a) vom Prover an den Verifier in unverschlüsselter Form, also als Klartext übermittelt. Dieser Schritt findet vor Schritt h) statt, aus Zeitgründen idealerweise zusammen mit der Übersendung des Authentikators direkt vor oder nach Schritt g). Diese Verfahrensform ist besonders günstig für die Datenauthentikation.

Nach einer weiteren Ausführungsform wird der Datensatz in Schritt a) vom Verifier als Zufallselement erzeugt und dem Prover übermittelt. Vorteilhaft ist es die Übermittlung asymmetrisch verschlüsselt durchzuführen, da dann einem potentiellen Angreifer auch der Datensatz selber nicht zugänglich ist. Bei der verschlüsselten Übermittlung können der gleiche Algorithmus und die gleichen Schlüsselpaare wie in den Schritten b) bis e) verwendet werden, wodurch vor allem bei Chipkarten bei der Hardwareimplementation eine platzsparende Umsetzung ermöglicht wird. Andererseits werden hier keine originären Daten vom Prover an den Verifier übermittelt, so daß sich diese Ausführungsform besonders vorteilhaft für die Einheitenauthentikation eignet. Der Schritt a) wird in dieser Ausführungform an beliebiger Schrittposition vor Schritt f) ausgeführt.

Wie in einer weiteren Ausführungsform beschrieben ist, kann der Authentikationsprüfalgorithmus AUTVER dem gleichen Algorithmus entsprechen wie das vorher angewandte Verfahren AUTGEN. Die eigentliche Authentikationsprüfung wird dann vom Verifier in ähnlicher Weise wie bei der Authentikatorerzeugung AUTGEN durch Anwendung dieses Authentikationsalgorithmus auf den Datensatz im Klartext mit dem wenigstens einen Datenelement als Schlüssel durchgeführt: das Ergebnis ist gleich dem vom Prover zugesandten Authentikator, nur wenn dieser offensichtlich Besitzer des zum ersten asymmetrischen Verschlüsselungsverfahren gehörigen privaten Schlüssels ist. In diesem Fall akzeptiert der Verifier die Nachricht als vom Prover übermittelt.

In einer weiteren Ausführungsform wird der Authentikationsalgorithmus aus Schritt h) als zweites Entschlüsselungsverfahren ausgebildet, welches mit dem zweiten Verschlüsselungsverfahren verschlüsselte Nachrichten entschlüsseln kann. Unter Verwendung des als Schlüssel dienenden, wenigstens einen Datenelementes kann der Verifier den Authentikator entschlüsseln und erhält damit einen Datensatz, welcher mit dem ursprünglich im Klartext übermittelten Datensatz verglichen werden kann.

Wie in einer weiteren Ausführungsform vorgesehen ist, können in dem Fall, daß mehrere Datenelemente übertragen und zur zweiten Verschlüsselung in Schritt f) beim Prover herangezogen werden, die Schritte b) bis e) für ein einzelnes Datenelement auch blockweise ausgeführt werden, nach deren Ausführung die gleichen Schritte wieder für das nächste Datenelement ausgeführt werden etc. Dies entspricht dann einer Wiederholung der Schritte b) bis e) mit der Häufigkeit der benutzten Datenelemente.

In einer weiteren Ausbildung ist die Verwendung diskreter Exponentiation für das erste Ver- und Entschlüsselungsverfahren vorgesehen. Dieses ist besonders vorteilhaft, da es einerseits ein hohes Maß an Sicherheit ermöglicht, denn das Problem des diskreten Logarithmus kann von Angreifern - bei geeigneter Wahl der verwendeten algebraischen Basisstruktur - nur durch im Aufwand besonders stark mit der Größe des Exponenten ansteigenden Lösungstechniken behandelt werden. Gleichzeitig wird nur wenig Speicherplatz auf z.B. einer Chipkarte benötigt.

In weiteren Ausbildungen sind besonders vorteilhaft ausgeführte Algorithmen für die Ver- und Entschlüsselungsverfahren sowie die Authentikatorerzeugung und -prüfung beschrieben. Dabei werden die einzelnen aufeinander abgestimmten Teilmodule über spezielle Gruppen und Halbgruppen realisiert. Hierdurch entfällt einerseits die umständliche Langzahl-Modulo-Arithmetik, welche nach bisheriger Technik erheblichen Platzbedarf auf einem Chip erfordert, andererseits lassen sich damit die mindestens vier genannten Module bzw. Algorithmen in einer gemeinsamen Basis hardwaretechnisch realisieren, welches ebenfalls Platz ggf. auf dem Chip einspart.

Weitere Ausgestaltungen der Erfindung sind in den Unteransprüchen angegeben.

Die Erfindung wird nachfolgend an einem Ausführungsbeispiel anhand von Zeichnungen näher erläutert:

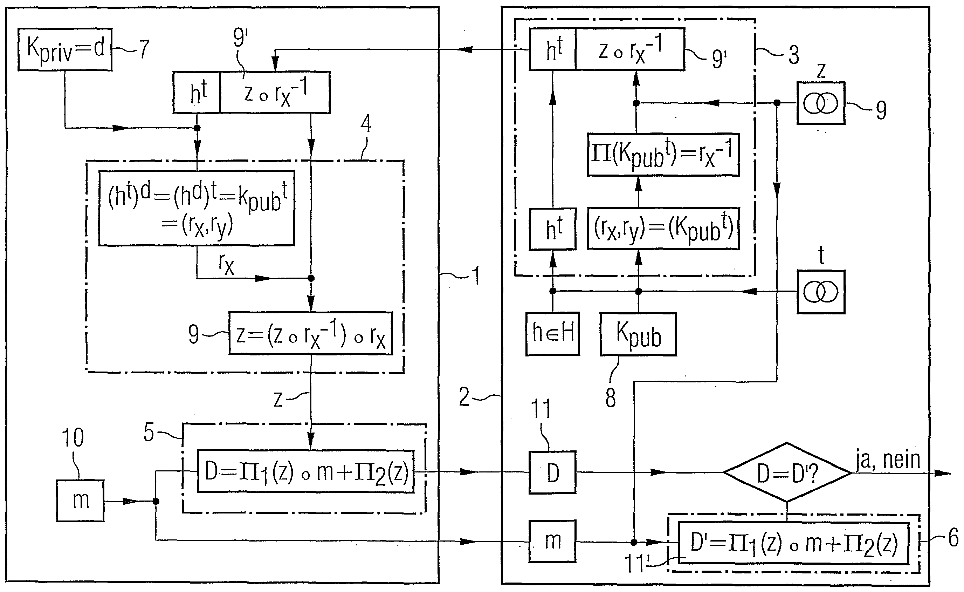

Figur 1    zeigt schematisch den Ablauf des erfindungsgemäßen Verfahrens zur authentisierten Datenübertragung zwischen der beweisführenden und der verifizierenden Einheit.

Eine Chipkarte wird in den CAD (card adapter device) eines Terminals gesteckt. Das Terminal erhält von der Chipkarte zunächst den öffentlichen Schlüssel 8 der Chipkarte versehen mit dem Zertifikat eines Trust-Centers. Die Chipkarte bzw. die integrierte Schaltung auf der Chipkarte übernimmt im folgenden die Aufgabe des Provers bzw. der beweisführenden Einheit 1, da sie ihre Identität und die Authentizität ihrer Daten gegenüber dem Terminal nachzuweisen hat, welches im folgenden die Position des Verifiers bzw. der verifizierenden Einheit 2 übernimmt. Nachfolgend wird erfindungsgemäß die authentisierte Übermittlung eines Datensatzes vom Prover an den Verifier beschrieben, wie in Figur 1 dargestellt ist.

Der Prover hält außerdem einen nur ihm bekannten privaten Schlüssel 7, welcher mit dem öffentlichen Schlüssel 8 ein Paar bildet. Der Verifier besitzt ein erstes Verschlüsselungsverfahren 3, mit dem die als Zufallselemente erzeugten Datenelemente 9 zu einem Chiffrat bzw. verschlüsselten Datenelement 9' verschlüsselt werden können. In das Verschlüsselungsverfahren gehen desweiteren Halbgruppenelemente und zusätzlich vom Verifier erzeugte Zufallszahlen für die diskrete Exponentiation ein. Für dieses erste Verschlüsselungsverfahren 3 sowie für die weiteren noch zu beschreibenden Algorithmen werden in diesem Ausführungsbeispiel basierend auf Gruppen und Halbgruppen folgende Ausprägungen genutzt, wobei sämtliche Verknüpfungen der vorkommenden Objekte auf die Arithmetik in endlichen Körpern $GF(2^n)$ zurückführbar sind:

$H$ : eine von dem Punkt h erzeugte Gruppe von Punkten auf einer elliptischen Kurve über $GF(2^n)$, wobei insbesondere H eine Halbgruppe ist;

$f$ : ist die identische Abbildung;

$d \equiv k_{priv}$ ist der private Schlüssel 7;

$k_{pub} = h^d$ ist der öffentliche Schlüssel 8;

$G$ : ist die multiplikative Gruppe in $GF(2^n)$;

$G_1$ : ist die multiplikative Gruppe in $GF(2^m)$,

mit $m = \dfrac{n-1}{2}$, n ungerade

$G_2$ : ist die additive Gruppe in $GF(2^m)$;

$\pi : H \to G$ ist eine Funktion, welche einen Kurvenpunkt $(p_x, p_y)$ der elliptischen Kurve mit $p_x \neq 0$ auf das Element $p_x^{-1}$ abbildet.

$\pi_1 : G \to G_1$ $\pi_1(z)$ besteht aus den oberen m Bits von z

$\pi_2 : G \to G_2$ $\pi_2(z)$ besteht aus den unteren m Bits von z

Der Protokollablauf sieht folgendermaßen aus:

Step 1 (Schritt b): der Verifier 2 erzeugt eine Zufallszahl t und ein Zufallselement $z_1 \in G$ als Datenelement 9;

Step 2 (Schritt c):

i) der Verifier 2 berechnet im ersten Verschlüsselungsverfahren 3 die Elemente $h^t$ und

$$k_{pub}{}^t = r = \left(r_x, r_y\right) \in H;$$

ii) der Verifier 2 berechnet im ersten Verschlüsselungsverfahren 3 aus dem öffentlichen Schlüssel 8 von $k_{pub}$ das Element $\pi(k_{pub}{}^t) = r_x^{-1} \in G$;

iii) der Verifier 2 verschlüsselt das Datenelement 9 im ersten Verschlüsselungsverfahren 3 durch die Verknüpfung $z_1 \circ r_x^{-1} \in G$;

Step 3 (Schritt d): der Verifier 2 übermittelt als Chiffrat das verschlüsselte Datenelement 9' und das Element $h^t$;

Step 4 (Schritt e):

i) der Prover 1 berechnet anhand des gesendeten Elementes $h^t$ im ersten Entschlüsselungsverfahren 7 mittels des privaten Schlüssels 7 durch $(h^t)^d = (h^d)^t = k_{pub}{}^t = (r_x, r_y)$ den Kurvenpunkt, ohne selbst in Kenntnis von t zu sein;

ii) der Prover 1 berechnet anhand des verschlüsselten Datenelementes 9' und dem berechneten Element $r_x$ aus dem gesendeten Chiffrat im ersten Entschlüsselungsverfahren 4 mit $z_1 = (z_1 \circ r_x^{-1}) \circ r_x \in G$ das unverschlüsselte Datenelement 9;

Step 5 (Schritt a): der in Figur 1 auch mit m bezeichnete Datensatz 10 wird im Klartext vom Prover 1 an den Verifier 2 gesendet;

Step 6 (Schritt f): der Prover 1 bildet den in Figur 1 auch mit D bezeichneten Authentikator 11 im zweiten Verschlüsselungsverfahren 5 durch die Verknüpfung $D = \pi_1(z_1) \circ m + \pi_2(z_1)$ anhand der nun als Schlüssel verwendeten Datenelemente 9;

Step 7 (Schritt g): der Prover 1 übermittelt den Authentikator 11 an den Verifier 2;

Step 8 (Schritt h): der Verifier 2 berechnet im Authentikationsalgorithmus 6 aus der Verknüpfung $D' = \pi_1(z_1) \circ m + \pi_2(z_1)$ den Referenzauthentikator 11', wobei der Authentikationsalgorithmus 6 die gleichen Rechenoperationen wie das zweite kryptographische Verfahren ausführt;

Step 9 (Schritt i): der Verifier 2 überprüft die Identität des Authentikators 11 mit dem Referenzauthentikator 11': falls D=D', wird der Datensatz 10 mit Wert m als vom Prover 1 übermittelt akzeptiert;

Bezugszeichenliste

1 Beweisführende Einheit, Prover
2 Verifizierende Einheit, Verifier
3 erstes Verschlüsselungsverfahren, asymmetrisch
4 erstes Entschlüsselungsverfahren, asymmetrisch
5 zweites kryptographisches Verfahren; Algorithmus zur Erzeugung eines Authentikators
6 Authentikationsprüfalgorithmus
7 privater Schlüssel
8 öffentlicher Schlüssel
9 Datenelement, unverschlüsselt
9' Datenelement, verschlüsselt
10 Datensatz
11 Authentikator

11' Referenzauthentikator

**Patentansprüche**

1. Verfahren zur Authentikation eines Datensatzes (10) zwischen einer beweisführenden Einheit (1) und einer verifizierenden Einheit (2) in der Datenverarbeitung, umfassend die Schritte:

   a) der Datensatz (10) wird von der beweisführenden Einheit (1) unverschlüsselt an die verifizierende Einheit (2) derart übermittelt, daß er nach der Übermittlung beiden Einheiten (1, 2) unverschlüsselt vorliegt,
   b) die verifizierende Einheit (2) erzeugt wenigstens ein Datenelement (9),
   c) die verifizierende Einheit (2) verschlüsselt das wenigstens eine Datenelement (9) in einem ersten kryptographischen Verschlüsselungsverfahren (3) mittels eines der verifizierenden Einheit (2) bekannten öffentlichen Schlüssels (8) der beweisführenden Einheit (1),
   d) die verifizierende Einheit (2) übermittelt das wenigstens eine verschlüsselte Datenelement (9') an die beweisführende Einheit (1),
   e) die beweisführende Einheit (1) entschlüsselt das wenigstens eine verschlüsselte Datenelement (9') in einem dem ersten Verschlüsselungsverfahren (3) zugeordneten ersten Entschlüsselungsverfahren (4) mittels eines nur ihr bekannten privaten Schlüssels (7),
   f) die beweisführende Einheit (1) berechnet aus dem zu authentisierenden Datensatz (10) in einem zweiten kryptographischen Verfahren (5) einen von dem wenigstens einen Datenelement (9) abhängigen Authentikator (11),
   g) die beweisführende Einheit (1) übermittelt den Authentikator (11) an die verifizierende Einheit (2),
   h) die verifizierende Einheit (2) prüft mit Hilfe eines dem zweiten kryptographischen Verfahren (5) zugeordneten Authentikationsprüfalgorithmus (6) unter Verwendung des wenigstens einen unverschlüsselten Datenelementes (9) und des Datensatzes (10) den Authentikator (11),
   i) in Abhängigkeit vom Prüfergebnis akzeptiert die verifizierende Einheit (2) den Datensatz (10) als von der beweisführenden (1) Einheit übermittelt.

2. Verfahren nach einem der Anspruch 1,
   **dadurch gekennzeichnet, daß**
   in Schritt h)

   - der Authentikationsprüfalgorithmus (6) im wesentlichen identisch mit dem zweiten kryptographischen Verfahren zur Authentikatorerzeugung (5) ist,
   - der Authentikationsprüfalgorithmus (6) von der verifizierenden Einheit (2) auf das wenigstens eine unverschlüsselte Datenelement (9) und den Datensatz (10) zur Bildung eines Referenzauthentikators (11') angewendet wird,
   - der Referenzauthentikator (11') mit dem Authentikator (11) verglichen wird.

3. Verfahren nach einem der Ansprüche 1 bis 2,
   **dadurch gekennzeichnet, daß**
   in Schritt h)

   - der Authentikationsprüfalgorithmus (6) aus einem Entschlüsselungsverfahren besteht, das dem zweiten kryptographischen Verfahren (5) zur Erzeugung eines Authentikators, dem zugehörigen Verschlüsselungsverfahren, entspricht,
   - der Authentikationsprüfalgorithmus (6) von der verifizierenden Einheit (2) auf den Authentikator (11) durch Entschlüsselung zur Bildung eines Referenzdatenelementes und eines Referenzdatensatzes angewendet wird,
   - das Referenzdatenelement und der Referenzdatensatz mit dem unverschlüsselten Datenelement (9) und dem unverschlüsselten Datensatz (10) verglichen werden.

4. Verfahren nach einem der Ansprüche 1 bis 3,
   **dadurch gekennzeichnet, daß**

   - die Schritte b), c), d) und e) zur Erzeugung wenigstens eines weiteren Datenelementes (9) vor Schritt f) wiederholt werden,
   - die beweisführende Einheit (1) den zu authentisierenden Datensatz (10) in Schritt f) in Abhängigkeit von dem wenigstens einen Datenelement (9) und dem wenigstens einen weiteren Datenelement (9) zu einem Authentikator (11) verschlüsselt.

5. Verfahren nach einem der Ansprüche 1 bis 4,
   **dadurch gekennzeichnet, daß**
   das erste kryptographische Verschlüsselungsverfahren (3) und das diesem zugeordnete erste Entschlüsselungsverfahren (4) mittels diskreter Exponentiation in einer Halbgruppe durchgeführt wird.

6. Verfahren nach Anspruch 5,
   **dadurch gekennzeichnet, daß**
   das erste kryptographische Verschlüsselungsverfahren (3) und das diesem zugeordnete erste Entschlüsselungsverfahren (4) mittels eines Algorithmus basierend auf elliptischen Kurven durchgeführt wird.

7. Verfahren nach einem der Ansprüche 5 oder 6,

**dadurch gekennzeichnet, daß**

das erste kryptographische Verschlüsselungsverfahren (3) die folgenden Operationen umfaßt:

- die verifizierende Einheit (2) erzeugt eine Zahl $t \in T$, wobei T ein Teilbereich der ganzen Zahlen ist,
- die verifizierende Einheit (2) berechnet das Element $h^{f(t)} \in H$, wobei $f : T \to T'$ eine Abbildung in einen nicht notwendigerweise von T verschiedenen Teilbereich T' der ganzen Zahlen ist, H eine durch das Element h erzeugte, multiplikativ geschriebene Halbgruppe darstellt mit der diskreten Exponentiation zur Basis h als Einwegfunktion in der Halbgruppe H,
- die verifizierende Einheit (2) berechnet aus dem öffentlichen Schlüssel (8), $k_{pub} = h^{f(d)} \in H$, das Element $\pi(k_{pub}^{f(t)}) \in G$, wobei $\pi : H \to G$ eine Abbildung der Halbgruppe H in eine Gruppe G angibt, $d \equiv k_{priv} \in T$ der nur der beweisführenden Einheit zugängliche private Schlüssel (7) ist, und die Abbildung $t \to h^{f(t)} \to \pi(h^{f(t)})$ vom Teilbereich der ganzen Zahlen T auf die Gruppe G eine Einwegfunktion darstellt,
- die verifizierende Einheit (2) verschlüsselt das wenigstens eine Datenelement (9), z, durch eine Verknüpfung zum verschlüsselten Datenelement (9'), $z' = z \circ \pi(k_{pub}^{f(t)}) \in G$.

8. Verfahren nach Anspruch 7,
**dadurch gekennzeichnet, daß**
die verifizierende Einheit (2) in Schritt d) zusätzlich zum verschlüsselten Datenelement (9') das Element $h^{f(t)} \in H$ an die beweisführende Einheit (1) übermittelt.

9. Verfahren nach Anspruch 8,
**dadurch gekennzeichnet, daß**
das erste kryptographische Entschlüsselungsverfahren (4) die folgenden Operationen umfaßt:

- die beweisführende Einheit (1) berechnet mittels der Funktion f, des Elementes $h^{f(t)} \in H$ und des nur ihr bekannten privaten Schlüssels d das Element $k_{pub}^{f(t)} \in H$,
- die beweisführende Einheit (1) berechnet das zum Element $\pi(k_{pub}^{f(t)}) \in G$ inverse Element $\pi'(k_{pub}^{f(t)}) \in G$,
- die beweisführende Einheit (1) entschlüsselt das verschlüsselte Datenelement (9') durch die Verknüpfung des verschlüsselten Datenelementes mit dem inversen Element:

$$z = z' \circ \pi'\left(k_{pub}^{f(t)}\right),$$

wobei dem ersten kryptographischen Entschlüsselungsverfahren (4) die gleichen Abbildungen f, $\pi$ und die gleiche Verknüpfung $\circ$ zugrundeliegen wie dem ersten kryptographischen Verschlüsselungsverfahren (3).

10. Verfahren nach Anspruch 9,
**dadurch gekennzeichnet, daß**
das zweite kryptographische Verfahren (5) die folgenden Operationen umfaßt:

- die beweisführende Einheit (1) berechnet aus dem wenigstens einen unverschlüsselten Datenelement z ein Element $g_2 = \pi_1(z) \in G_1$ und ein Element $g_2 = \pi_2(z) \in G_2$, wobei $G_1$ und $G_2$ Gruppen mit $G_1 \subset G_2$ darstellen und $\pi_1 : G \to G_1$ und $\pi_2 : G \to G_2$ Funktionen darstellen, welche Elemente der Gruppe G auf die Gruppen $G_1$ oder $G_2$ abbilden,
- die beweisführende Einheit (1) transformiert den zu authentisierenden Datensatz (10), m, zu einem Element $g' = (g_1 * m)$ mit einer Gruppenverknüpfung $*$ in $G_1$,
- die beweisführende Einheit (1) berechnet den Authentikator (11), D, durch $D = inj(g') \cdot g_2$ mit der Gruppenverknüpfung $\cdot$ in $G_2$, wobei die Abbildung $inj : G_1 \to G_2$ Elemente aus $G_1$ injektiv in $G_2$ abbildet.

11. Verfahren nach einem der Ansprüche 1 bis 10,
**dadurch gekennzeichnet, daß**
vor Schritt b)

- die beweisführende Einheit (1) ihren öffentlichen Schlüssel (8) mit einem Zertifikat eines Trust-Centers übermittelt,
- die verifizierende Einheit (2) mittels eines Zertifizierungsverfahrens die Gültigkeit des öffentlichen Schlüssels (8) der beweisführenden Einheit (1) überprüft,
- die verifizierende Einheit (2) die Kommunikation mit der beweisführenden Einheit (1) in Abhängigkeit des Ergebnisses der Überprüfung fortsetzt.

12. Verfahren nach einem der Ansprüche 1 bis 11,
**dadurch gekennzeichnet, daß**
die beweisführende Einheit (1) eine integrierte Schaltung auf einer Chipkarte ist, und die verifizierende Einheit (2) ein Chipkartenterminal ist.

13. Verfahren nach einem der Ansprüche 1 bis 11,
**dadurch gekennzeichnet, daß**
die beweisführende Einheit (1) eine integrierte Schaltung in einem Identifikations-/Authentikationstoken ist, welches fest mit einem nicht ortsgebundenen Objekt verbunden ist.

14. Verfahren nach einem der Ansprüche 12 oder 13,

**dadurch gekennzeichnet, daß**

die Kommunikation zwischen beweisführender Einheit (1) und verifizierender Einheit (2) kontaktlos erfolgt.

**Claims**

1. Method for authenticating a data set (10) between a proving unit (1) and a verifying unit (2) in data processing, comprising the following steps:

   a) the data set (10) is transmitted from the proving unit (1) to the verifying unit (2) in unencrypted form in such a way that it is available in unencrypted form to both units (1, 2) after transmission,
   b) the verifying unit (2) generates at least one data element (9),
   c) the verifying unit (2) encrypts the at least one data element (9) in a first cryptographic encryption method (3) using a public key (8) of the proving unit (1), which public key is known to the verifying unit (2),
   d) the verifying unit (2) transmits the at least one encrypted data element (9') to the proving unit (1),
   e) the proving unit (1) decrypts the at least one encrypted data element (9') in a first decryption method (4), assigned to the first encryption method (3), using a private key (7) known only to it,
   f) the proving unit (1) calculates, from the data set (10) to be authenticated, in a second cryptographic method (5), an authenticator (11) dependent on the at least one data element (9),
   g) the proving unit (1) transmits the authenticator (11) to the verifying unit (2),
   h) the verifying unit (2) checks the authenticator (11) with the aid of an authentication checking algorithm (6), which is assigned to the second cryptographic method (5), using the at least one unencrypted data element (9) and the data set (10),
   i) depending on the checking result, the verifying unit (2) accepts the data set (10) as transmitted by the proving unit (1).

2. Method according to Claim 1,
   **characterized in that**
   in step h)

   - the authentication checking algorithm (6) is essentially identical to the second cryptographic method for authenticator generation (5),
   - the authentication checking algorithm (6) is applied by the verifying unit (2) to the at least one unencrypted data element (9) and the data set (10) for the purpose of forming a reference authenticator (11'),
   - the reference authenticator (11') is compared with the authenticator (11).

3. Method according to one of Claims 1 to 2,
   **characterized in that**
   in step h)

   - the authentication checking algorithm (6) comprises a decryption method which corresponds to the second cryptographic method (5) for generating an authenticator, the associated encryption method,
   - the authentication checking algorithm (6) is applied by the verifying unit (2) to the authenticator (11) by decryption for the purpose of forming a reference data element and a reference data set,
   - the reference data element and the reference data set are compared with the unencrypted data element (9) and the unencrypted data set (10).

4. Method according to one of Claims 1 to 3,
   **characterized in that**

   - steps b), c), d) and e) are repeated for the purpose of generating at least one further data element (9) before step f),
   - the proving unit (1) encrypts the data set (10) to be authenticated in step f) in a manner dependent on the at least one data element (9) and the at least one further data element (9) to form an authenticator (11).

5. Method according to one of Claims 1 to 4,
   **characterized in that**
   the first cryptographic encryption method (3) and the first decryption method (4) assigned thereto are carried out by means of discrete exponentiation in a semigroup.

6. Method according to Claim 5,
   **characterized in that**
   the first cryptographic encryption method (3) and the first decryption method (4) assigned thereto are carried out by means of an algorithm based on elliptical curves.

7. Method according to either of Claims 5 and 6,
   **characterized in that**
   the first cryptographic encryption method (3) comprises the following operations:

   - the verifying unit (2) generates a number $t \in T$, where T is a subrange of the integers,
   - the verifying unit (2) calculates the element $h^{f(t)} \in H$, where $f : T \rightarrow T'$ is a mapping into a subrange T' of the integers which is not necessarily different from T, H represents a multiplicatively written semigroup generated by the element h, with the discrete exponentiation of the base h as a one-way function in the semigroup H,
- the verifying unit (2) calculates from the public key (8), $k_{pub} = h^{f(d)} \in H$, the element $\pi(k_{pub}^{f(t)}) \in G$, where $\pi : H \to G$ specifies a mapping of the semigroup H into a group G, $d = k_{priv} \in T$ is the private key (7) which is accessible only to the proving unit, and the mapping $t \to h^{f(t)} \to \pi(h^{f(t)})$ from the subrange of the integers T to the group G represents a one-way function,
- the verifying unit (2) encrypts the at least one data element (9), z, by a combination with respect to the encrypted data element (9'), $z' = z \circ \pi(k_{pub}^{f(t)}) \in G$.

8. Method according to Claim 7,
   **characterized in that**
   in step d), in addition to the encrypted data element (9'), the verifying unit (2) transmits the element $h^{f(t)} \in H$ to the proving unit (1).

9. Method according to Claim 8,
   **characterized in that**
   the first cryptographic decryption method (4) comprises the following operations:

   - the proving unit (1) calculates the element $k_{pub}^{f(t)} \in H$ using the function f, the element $h^{f(t)} \in H$ and the private key d known only to it,
   - the proving unit (1) calculates the inverse element $\pi'(k_{pub}^{f(t)}) \in G$ with respect to the element $\pi(k_{pub}^{f(t)}) \in G$,
   - the proving unit (1) decrypts the encrypted data element (9') by the combination of the encrypted data element with the inverse element: $z = z' \circ \pi'(k_{pub}^{f(t)})$,

   wherein the first cryptographic decryption method (4) is based on the same mappings f, $\pi$ and the same combination $\circ$ as the first cryptographic encryption method (3).

10. Method according to Claim 9,
    **characterized in that**
    the second cryptographic method (5) comprises the following operations:

    - the proving unit (1) calculates, from the at least one unencrypted data element z, an element $g_2 = \pi_1(z) \in G_1$ and an element $g_2 = \pi_2(z) \in G_2$, where $G_1$ and $G_2$ represent groups where $G_1 \subset G_2$ and $\pi_1 : G \to G_1$ and $\pi_2 : G \to G_2$ represent functions which map elements of the group G onto the groups $G_1$ or $G_2$,
    - the proving unit (1) transforms the data set (10) to be authenticated, m, to form an element $g' = (g_1 * m)$ with a group combination $*$ in $G_1$,
    - the proving unit (1) calculates the authenticator (11), D, by $D = inj(g') \cdot g_2$ with the group combination $\cdot$ in $G_2$, where the mapping $inj : G_1 \to G_2$ maps elements from $G_1$ injectively into $G_2$.

11. Method according to one of Claims 1 to 10,
    **characterized in that**
    before step b)

    - the proving unit (1) transmits its public key (8) with a certificate of a trust centre,
    - the verifying unit (2) checks the validity of the public key (8) of the proving unit (1) by means of a certification method,
    - the verifying unit (2) continues the communication with the proving unit (1) in a manner dependent on the result of the check.

12. Method according to one of Claims 1 to 11,
    **characterized in that**
    the proving unit (1) is an integrated circuit on a chip card, and the verifying unit (2) is a chip card terminal.

13. Method according to one of Claims 1 to 11,
    **characterized in that**
    the proving unit (1) is an integrated circuit in an identification/authentication token which is fixedly connected to a non-stationary object.

14. Method according to either of Claims 12 and 13,
    **characterized in that**
    the communication between the proving unit (1) and the verifying unit (2) takes place contactlessly.

**Revendications**

1. Procédé d'authentification d'un jeu de données (10) entre une unité de démonstration (1) et une unité de vérification (2) dans le traitement des données, comprenant les étapes suivantes :

   a) le jeu de données (10) est transmis non chiffré par l'unité de démonstration (1) à l'unité de vérification (2) de telle façon qu'il est disponible sous forme non chiffrée aux deux unités (1, 2) après la transmission,
   b) l'unité de vérification (2) produit au moins un élément de donnée (9),
   c) l'unité de vérification (2) chiffre l'au moins un élément de donnée (9) dans un premier procédé de chiffrement cryptographique (3) au moyen d'une clé (8) publique de l'unité de démonstration (1) connue de l'unité de vérification (2),
   d) l'unité de vérification (2) transmet l'au moins un élément de donnée chiffré (9') à l'unité de démonstration (1),

e) l'unité de démonstration (1) déchiffre l'au moins un élément de donnée chiffré (9') dans un premier procédé de déchiffrement (4) affecté au premier procédé de chiffrement (3) au moyen d'une clé (7) privée connue d'elle seule,

f) l'unité de démonstration (1) calcule à partir du jeu de données (10) à authentifier, dans un deuxième procédé cryptographique (5), un authentificateur (11) fonction de l'au moins un élément de donnée (9),

g) l'unité de démonstration (1) transmet l'authentificateur (11) à l'unité de vérification (2),

h) l'unité de vérification (2) vérifie l'authentificateur (11) à l'aide d'un algorithme de vérification d'authentification (6) affecté au deuxième procédé cryptographique (5) en utilisant l'au moins un élément de donnée (9) non chiffré et le jeu de données (10),

i) en fonction du résultat de vérification, l'unité de vérification (2) accepte le jeu de données (10) tel que transmis par l'unité de démonstration (1).

2. Procédé selon la revendication 1, **caractérisé en ce qu'**à l'étape h)

   - l'algorithme de vérification d'authentification (6) est essentiellement identique au deuxième procédé cryptographique pour produire l'authentificateur (5),
   - l'algorithme de vérification d'authentification (6) est employé par l'unité de vérification (2) sur l'au moins un élément de donnée (9) non chiffré et le jeu de données (10) pour former un authentificateur de référence (11'),
   - l'authentificateur de référence (11') est comparé à l'authentificateur (11).

3. Procédé selon l'une des revendications 1 à 2, **caractérisé en ce qu'**à l'étape h)

   - l'algorithme de vérification d'authentification (6) est composé d'un procédé de déchiffrement qui correspond soit au deuxième procédé cryptographique (5) pour produire un authentificateur, soit au procédé de chiffrement correspondant,
   - l'algorithme de vérification d'authentification (6) est employé par l'unité de vérification (2) sur l'authentificateur (11) par déchiffrement pour former un élément de donnée de référence et un jeu de données de référence,
   - l'élément de donnée de référence et le jeu de données de référence sont comparés à l'élément de donnée (9) non chiffré et au jeu de données (10) non chiffré.

4. Procédé selon l'une des revendications 1 à 3, **ca-**

**ractérisé en ce que** les étapes b), c), d) et e) sont répétées pour produire au moins un élément de donnée (9) supplémentaire avant l'étape f),

   - l'unité de démonstration (1) chiffre le jeu de données (10) à authentifier à l'étape f) en un authentificateur (11) en fonction de l'au moins un élément de donnée (9) et de l'au moins un élément de donnée (9) supplémentaire.

5. Procédé selon l'une des revendications 1 à 4, **caractérisé en ce que** le premier procédé de chiffrement cryptographique (3) et le procédé de déchiffrement (4) affecté à celui-ci sont exécutés au moyen d'une exponentiation discrète dans un demi-groupe.

6. Procédé selon la revendication 5, **caractérisé en ce que** le premier procédé de chiffrement cryptographique (3) et le procédé de déchiffrement (4) affecté à celui-ci sont exécutés au moyen d'un algorithme basé sur des courbes elliptiques.

7. Procédé selon l'une des revendications 5 ou 6, **caractérisé en ce que** le premier procédé de chiffrement cryptographique (3) comprend les opérations suivantes :

   - l'unité de vérification (2) produit un chiffre $t \in T$, dans lequel $T$ est une section des nombres entiers,
   - l'unité de vérification (2) calcule l'élément $h^{f(t)} \in H$, dans lequel $f : T \rightarrow T'$ est une application dans une section $T'$ des nombres entiers non nécessairement différente de $T$, $H$ représente un demi-groupe produit par l'élément $h$, écrit de manière multiplicative, avec l'exponentiation discrète pour la base de $h$ en tant que fonction de chiffrement unidirectionnelle dans le demi-groupe $H$,
   - l'unité de vérification (2) calcule à partir de la clé publique (8), $k_{pub} = h^{f(d)} \in H$, l'élément $\pi(k_{pub}^{f(t)}) \in G$, dans lequel $\pi : H \rightarrow G$ indique une application du demi-groupe $H$ dans un groupe $G$, $d \equiv k_{priv} \in T$ est la clé privée (7) accessible uniquement à l'unité de démonstration, et l'application $t \rightarrow h^{f(t)} \rightarrow \pi(h^{f(t)})$ de la section des nombres entiers $T$ sur le groupe $G$ représente une fonction de chiffrement unidirectionnelle,
   - l'unité de vérification (2) chiffre l'au moins un élément de donnée (9), z, par une combinaison vers l'élément de donnée (9') chiffré, $z' = z°\pi(k_{pub}^{f(t)}) \in G$.

8. Procédé selon la revendication 7, **caractérisé en ce que** l'unité de vérification (2) transmet à l'étape d) l'élément $h^{f(t)} \in H$ à l'unité de démonstration (1) en plus de l'élément de donnée chiffré (9').

9. Procédé selon la revendication 8, **caractérisé en ce que** le premier procédé de déchiffrement cryptographique (4) comprend les opérations suivantes :

- l'unité de démonstration (1) calcule l'élément $(k_{pub}^{f(t)}) \in H$ au moyen de la fonction f, de l'élément $h^{f(t)} \in H$, et de la clé d privée connue d'elle seule,
- l'unité de démonstration (1) calcule l'élément $\pi'(k_{pub}^{f(t)}) \in G$ inverse à l'élément $\pi(k_{pub}^{f(t)}) \in G$,
- l'unité de démonstration (1) déchiffre l'élément de donnée chiffré (9') par la combinaison de l'élément de donnée chiffré avec l'élément inverse $z = z'^{\circ}\pi'(k_{pub}^{f(t)})$,

dans lequel les mêmes applications f, $\pi$ et la même combinaison ° sont à la base du premier procédé de déchiffrement cryptographique (4) comme du premier procédé de chiffrement cryptographique (3).

10. Procédé selon la revendication 9, **caractérisé en ce que** le deuxième procédé cryptographique (5) comprend les opérations suivantes :

- l'unité de démonstration (1) calcule à partir de l'au moins un élément de donnée non chiffré z un élément $g2 = \pi_1(z) \in G_1$ et un élément $g2 = \pi_2(z) \in G_2$, dans lequel $G_1$ et $G_2$ représentent des groupes avec $G1 \subset G2$ et $\pi_1 : G \to G_1$ et $\pi_2 : G \to G_2$ représentent des fonctions qui appliquent des éléments du groupe G sur les groupes $G_1$ ou $G_2$,
- l'unité de démonstration (1) transforme le jeu de données (10) à authentifier, m, en un élément $g' = (g_1 * m)$ avec une combinaison de groupe $*$ dans $G_1$,
- l'unité de démonstration (1) calcule l'authentificateur (11), D, par $D = inj(g') \cdot g_2$ avec la combinaison de groupe $\cdot$ dans $G_2$, dans lequel l'application $inj : G_1 \to G_2$ applique des éléments de $G_1$ de manière injective dans $G_2$.

11. Procédé selon l'une des revendications 1 à 10, **caractérisé en ce qu'**avant l'étape b)

- l'unité de démonstration (1) transmet sa clé publique (8) avec un certificat d'un trust-center,
- l'unité de vérification (2) vérifie la validité de la clé publique (8) de l'unité de démonstration (1) à l'aide d'un procédé de certification,
- l'unité de vérification (2) poursuit la communication avec l'unité de démonstration (1) en fonction du résultat de la vérification.

12. Procédé selon l'une des revendications 1 à 11, **caractérisé en ce que** l'unité de démonstration (1) est un circuit intégré sur une carte à puce et l'unité de vérification (2) est un terminal de carte à puce.

13. Procédé selon l'une des revendications 1 à 11, **caractérisé en ce que** l'unité de démonstration (1) est un circuit intégré dans un jeton d'identification/d'authentification qui est relié fixement à un objet non stationnaire.

14. Procédé selon l'une des revendications 12 ou 13, **caractérisé en ce que** la communication entre l'unité de démonstration (1) et l'unité de vérification (2) s'effectue sans contact.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MENEZES, A. et al.** Handbook of Applied Cryptography. CRC Press, 1997